# EUROPÄISCHE PATENTSCHRIFT

(11) **EP 4 263 397 B1**
(45) Veröffentlichungstag und Bekanntmachung des Hinweises auf die Patenterteilung: **22.04.2026**
(21) Anmeldenummer: 21840826.8
(22) Anmeldetag: 16.12.2021
(51) Int. Cl.: B65G 47/51, A23B 2/00, A23B 2/22, B65G 47/68, B65G 47/71, B65G 47/76

(54) **THERMISCHE BEHANDLUNGSVORRICHTUNG UND VERFAHREN ZUM BETREIBEN DER THERMISCHEN BEHANDLUNGSVORRICHTUNG**
THERMAL TREATMENT DEVICE AND METHOD FOR OPERATING THE THERMAL TREATMENT DEVICE
DISPOSITIF DE TRAITEMENT THERMIQUE ET PROCÉDÉ DE FONCTIONNEMENT DU DISPOSITIF DE TRAITEMENT THERMIQUE

(30) Priorität: 18.12.2020 DE 102020134232
(43) Veröffentlichungstag der Anmeldung: 25.10.2023
(73) Patentinhaber: Krones AG, 93073 Neutraubling (DE)
(72) Erfinder: DEPNER, Christian, 93073 Neutraubling (DE); LUECKE, Jens, 93073 Neutraubling (DE); CLAUSEN, Niels, 93073 Neutraubling (DE); LEDDERER, Johannes, 93073 Neutraubling (DE)
(74) Vertreter: Grünecker Patent- und Rechtsanwälte PartG mbB
(86) Internationale Anmeldenummer: PCT/EP2021/086235
(87) Internationale Veröffentlichungsnummer: WO 2022/129354

(56) Entgegenhaltungen:
- DE-A1- 102016 205 304
- DE-A1- 3 715 577
- DE-T2- 60 308 498
- DE-U1- 202014 105 593
- JP-A- H 119 244
- KR-B1- 101 287 160

## Beschreibung

Die Erfindung betrifft eine thermische Behandlungsvorrichtung gemäß Anspruch 1 und ein Verfahren zum Betreiben der thermischen Behandlungsvorrichtung gemäß Anspruch 13.

### Stand der Technik

KR 101 287 160 B1 offenbart eine thermische Behandlungsvorrichtung nach dem Oberbegriff des Anspruchs 1. Die genannte Druckschrift offenbart eine Übergabe von Behältern, die auf mehreren, parallel angeordneten Förderern eines Zuförderers in eine erste Richtung transportiert werden, an einen Massenstromförderer, der sie in eine zweite Richtung transportiert, die senkrechte zur ersten Richtung ist. Zwischen dem Zuförderer und dem Massenstromförderer ist ein Förderer vorgesehen, der die Behälter in eine dritte Richtung transportiert, die entgegengesetzt zu der ersten Richtung ist.

DE 10 2016 205 304 A1 offenbart eine Niederdruck-Speichervorrichtung und/oder Verteileinheit für Behälter umfassend einen Speichertisch mit Durchlaufbändern zum Fördern der Behälter durch den Speichertisch und mit Speicherbändern, die beidseitig entlang der Durchlaufbänder verlaufen und langsamer antreibbar sind als die Durchlaufbänder. Ferner ist im Einlaufbereich ein Zuförderband für die Behälter vorhanden. Dadurch, dass das Zuförderband quer, insbesondere im rechten Winkel, zu den Durchlaufbändern und den Speicherbändern verläuft, dass zwischen Zuförderband und Speichertisch insbesondere ein zum Zuförderband gegenläufiges Transferband ausgebildet ist, und dass im Einlaufbereich wenigstens ein Ablenkelement zum Ablenken der Behälter vom Zuförderband auf den Speichertisch ausgebildet ist, lässt sich ein Strom aus zugeförderten Behältern selektiv und zuverlässig auf die Durchlaufbänder leiten und sich gleichzeitig ein Einlaufbereich mit hoher Einlaufgeschwindigkeit und kompakten Abmessungen bereitstellen.

DE 10 255 814 A1 offenbart eine Vorrichtung zur Auseinanderführung und Aufteilung von Behälterströmen mit mindestens einem Behältereinlauf, mindestens zwei Einlaufbändern und mindestens einem, im Behälterstrom angeordneten Führungselement, dabei ist vorgesehen, dass die bei Transportanlagen üblichen Transportbänder innerhalb der Auseinanderführung so geführt werden, dass sie den Behälterstrom auseinanderführen und aufteilen.

Derartige Vorrichtungen können in einer Anlage einen hohen Platzbedarf erfordern und auf die Behälter einwirkende Kräfte können hoch sein.

### Aufgabe

Die Aufgabe der Erfindung besteht darin, eine thermische Behandlungsvorrichtung, wie einen Pasteur, Kühler oder Wärmer, mit mindestens einer Behälterzuführvorrichtung zum Zuführen von Behältern zu einem Massenstromförderer zur Verfügung zu stellen, die platzsparend betrieben werden kann und wobei in der Behälterzuführvorrichtung auf die Behälter einwirkende Kräfte reduzierbar sind.

### Lösung

Diese Aufgabe wird gelöst durch die thermische Behandlungsvorrichtung mit mindestens einer Behälterzuführvorrichtung nach Anspruch 1 und das Verfahren zum Betreiben der thermischen Behandlungsvorrichtung nach Anspruch 13. Weitere Merkmale der Erfindung sind in den Unteransprüchen offenbart.

Die thermische Behandlungsvorrichtung, wie ein Pasteur, Kühler oder Wärmer, mit mindestens einer Behälterzuführvorrichtung zum Zuführen von Behältern zu einem Massenstromförderer ist anschließend an die mindestens eine Behälterzuführvorrichtung angeordnet. Die Behälterzuführvorrichtung umfasst einen mindestens einspurigen Einlaufförderer, der in eine erste Richtung antreibbar und ausgebildet ist, Behälter in die erste Richtung zu fördern. Weiter umfasst die Behälterzuführvorrichtung parallel anschließend an den mindestens einspurigen Einlaufförderer eine erste Gruppe von mehreren parallel angeordneten ersten Förderern, die in die erste Richtung antreibbar und ausgebildet sind, Behälter in die erste Richtung zu fördern, und parallel anschließend an die erste Gruppe von mehreren parallel angeordneten ersten Förderern eine zweite Gruppe von mehreren parallel angeordneten zweiten Förderern, die in eine zweite Richtung antreibbar und ausgebildet sind, Behälter in die zweite Richtung zu fördern, die entgegengesetzt zu der ersten Richtung ist. Die Behälter sind von der zweiten Gruppe von mehreren parallel angeordneten zweiten Förderern quer zur zweiten Richtung in Richtung zu einem Massenstromförderer abgebbar.

Die Behälter können Glas-Flaschen, PET-Flaschen und/oder Dosen umfassen. Beispielsweise sind die Behälter mit einem Produkt befüllt, dass in der oder mittels der thermischen Behandlungsvorrichtung thermisch behandelt werden soll.

Die thermische Behandlungsvorrichtung kann ein Pasteur, ein Kühler oder ein Wärmer sein. Im Pasteur kann als thermische Behandlung eine Pasteurisierung der Behälter, d.h. auch von in ihnen befindlichem Produkt, stattfinden. Im Kühler kann als thermische Behandlung eine Kühlung der Behälter, d.h. auch von in ihnen befindlichem Produkt, stattfinden. Im Wärmer kann als thermische Behandlung eine Erwärmung der Behälter, d.h. auch von in ihnen befindlichem Produkt, stattfinden.

Der Behälterzuführvorrichtung können die, beispielsweise mit Produkt befüllten, Behälter durch eine Transportvorrichtung, die stromauf der Behälterzuführvorrichtung angeordnet sein kann, zugeführt werden. Die Transportvorrichtung kann die Behälter der Behälterzuführvorrichtung einspurig zuführen.

Der mindestens einspurige Einlaufförderer der Behälterzuführvorrichtung kann als ein Einlauf zu der ersten Gruppe angesehen werden. Die erste Gruppe kann eine Anzahl von n > 1 ersten Förderern umfassen, beispielsweise n = 3. Der erste (n = 1) der ersten Förderer kann benachbart zu dem mindestens einspurigen Einlaufförderer angeordnet sein, der zweite (n = 2) der ersten Förderer kann benachbart zu dem ersten (n = 1) der ersten Förderer angeordnet sein und der dritte (n = 3) der ersten Förderer kann benachbart zu dem zweiten (n = 2) der ersten Förderer angeordnet sein.

Die zweite Gruppe kann eine Anzahl von m > 1 zweiten Förderern umfassen, beispielsweise m = 3 (die Anzahl von Förderern in der ersten und zweiten Gruppe kann aber auch verschieden sein). Der erste (m = 1) der zweiten Förderer kann benachbart zu dem dritten (n = 3) der ersten Förderer angeordnet sein, der zweite (m = 2) der zweiten Förderer kann benachbart zu dem ersten (m = 1) der zweiten Förderer angeordnet sein und der dritte (m = 3) der zweiten Förderer kann benachbart zu dem zweiten (m = 2) der zweiten Förderer und dem Massenstromförderer angeordnet sein.

Parallel anschließend kann bedeuten, dass zwischen dem mindestens einspurigen Einlaufförderer und/oder den Förderern und/oder einem Förderer und dem Massenstromförderer ein Abstand vorgesehen sein kann, der kleiner als ein Durchmesser eines Behälters sein kann, oder ein Überschubblech mit einer Breite, die kleiner als ein Durchmesser eines Behälters sein kann.

Die erste Gruppe kann zusammenfassend die mehreren ersten Förderer beschreiben, die in die erste Richtung antreibbar sind. Dabei können die mehreren ersten Förderer individuell antreibbar ausgebildet sein. Eine Steuerung von Antriebsgeschwindigkeiten kann mittels einer Steuerungsvorrichtung erfolgen, die von der Behälterzuführvorrichtung umfasst sein kann. Die Antriebsgeschwindigkeiten können für die mehreren ersten Förderer gleich oder verschieden sein. Die ersten Förderer können jeweils eine Transportoberfläche umfassen, wobei die Transportoberfläche koplanar ausgerichtet sein können. Das Gleiche gilt für die zweite Gruppe, die zusammenfassend die mehreren zweiten Förderer beschreiben kann, die in die zweite Richtung antreibbar sind.

Die Bezeichnung "erste" bzw. "zweite" dient lediglich zur Unterscheidung der Elemente, ist aber sonst nicht als weiter einschränkend zu verstehen.

Der einspurige mindestens Einlaufförderer kann eine Transportoberfläche umfassen. Der Massenstromförderer kann eine Transportoberfläche umfassen.

In der thermischen Behandlungsvorrichtung mit der mindestens einen Behälterzuführvorrichtung können die verschiedenen Transportoberflächen koplanar angeordnet sein, wenn die mindestens eine Behälterzuführvorrichtung horizontal ausgerichtet ist (senkrecht zur Wirkrichtung der Schwerkraft). Die Transportoberfläche der thermischen Behandlungsvorrichtung kann immer horizontal (senkrecht zur Wirkrichtung der Schwerkraft) ausgerichtet sein. Es kann jedoch auch vorgesehen sein, dass die Transportoberfläche der thermischen Behandlungsvorrichtung mit einer zur Wirkrichtung der Schwerkraft senkrechten Ebene einen Winkel von 0,5° bis 14° (die Bereichsgrenzen sind miteingeschlossen) einschließen kann.

Die Behälterzuführvorrichtung kann einen Abgabebereich umfassen, in dem die Behälter von der zweiten Gruppe von mehreren parallel angeordneten zweiten Förderern quer zur zweiten Richtung in Richtung zu einem Massenstromförderer abgebbar sind, eine Länge aufweist, die mindestens doppelt so groß ist wie eine Förderbreite der Behälterzuführvorrichtung.

Der Abgabebereich kann von demjenigen zweiten Förderer umfasst sein, der benachbart zu dem Massenstromförderer angeordnet ist. Der Abgabebereich kann zumindest einen Teil der Transportoberfläche dieses zweiten Förderers umfassen und von dem Abgabebereich können Behälter durch nachdrängende Behälter quer zur zweiten Richtung in Richtung zum Massenstromförderer abgegeben werden.

Die Förderbreite der Behälterzuführvorrichtung kann sich dabei aus der Summe der Förderbreiten (eine Förderbreite kann beispielsweise eine Breite der jeweiligen Transportoberfläche sein) des einspurigen mindestens Einlaufförderers, der ersten Förderer und der zweiten Förderer zusammensetzen. Zu der Förderbreite der Behälterzuführvorrichtung können neben dieser Summe der Förderbreiten auch mögliche Abstände zwischen dem mindestens einspurigen Einlaufförderer und der ersten Gruppe und zwischen der ersten Gruppe und der zweiten Gruppe hinzugezählt werden. Zu der Förderbreite der Behälterzuführvorrichtung können auch mögliche Abstände zwischen den ersten Förderern und zwischen den zweiten Förderern hinzugezählt werden. Die Breite kann in einer Ebene der Transportoberflächen senkrecht zur ersten oder zweiten Richtung gemessen werden.

Da die Länge des Abgabebereichs mindestens doppelt so groß ist wie eine Förderbreite der Behälterzuführvorrichtung können die Behälter an den Massenstromförderer abgegeben werden, ohne dass sich ein hoher Staudruck zwischen den Behältern ausbildet. Die Länge kann entlang der ersten oder zweiten Richtung gemessen werden.

Der Massenstromförderer kann ein Förderband oder mehrere nebeneinander angeordnete Förderbänder umfassen, die sich in eine dritte Richtung bewegen, die senkrecht zu der ersten und der zweiten Richtung verläuft. Der Massenstromförderer wird im Allgemeinen nicht von der Behälterzuführvorrichtung umfasst, er kann aber auch von der Behälterzuführvorrichtung umfasst sein.

Der Abgabebereich kann relativ zum Massenstromförderer derart angeordnet sein, dass Behälter von Transportoberflächen der zweiten Förderer an eine Transportoberfläche des Massenstromförderers abgebbar sind. Der Abgabebereich kann gegenüberliegend zu einem Eingangsbereich des Massenstromförderers angeordnet sein.

Dabei können Behälter von einem zweiten Förderer, der unmittelbar benachbart (eventuell mit Überschubblech/Abstand dazwischen) zum Massenstromförderer angeordnet ist, direkt (eventuell direkt über das Überschubblech/ den Abstand) an den Massenstromförderer abgegeben werden (durch Druck nachfolgender Behälter).

In einer anderen Ausführungsform der Behälterzuführvorrichtung kann parallel anschließend an die zweite Gruppe von mehreren parallel angeordneten zweiten Förderern ein weiterer einspuriger (oder mehrere wie etwa 2 oder 3 weitere einspurige) Zulaufförderer vorgesehen sein, wobei der weitere einspurige Zulaufförderer oder die mehreren weiteren einspurigen Zulaufförderer in die erste Richtung antreibbar und ausgebildet sein kann/können, Behälter in die erste Richtung zu fördern. Ein Antrieb der mehreren weiteren einspurigen Zulaufförderer kann unabhängig voneinander erfolgen.

Der weitere einspurige Zulaufförderer kann oder die mehreren weiteren einspurigen Zulaufförderer können zwischen der zweiten Gruppe und dem Massenstromförderer angeordnet sein. Er kann oder sie können als ein Einlauf zu dem Massenstromförderer angesehen werden.

Da sich der weitere einspurige Zulaufförderer oder die mehreren weiteren einspurigen Zulaufförderer in die erste Richtung bewegt/bewegen, also in die ursprüngliche Einlaufrichtung des mindestens einspurigen Einlaufförderers, kann eine Verteilung und eine Abgabe der Behälter an den Massenstromförderer verbessert werden. Behälter, die von dem weiteren einspurigen Zulaufförderer oder den mehreren weiteren einspurigen Zulaufförderer an den Massenstromförderer abgegeben werden, können auch gut in einen Bereich des Massenstromförderers abgegeben werden, der dem Ende des weiteren einspurigen Zulaufförderers oder den Enden der mehreren weiteren einspurigen Zulaufförderer gegenüberliegt.

Der weitere einspurige Zulaufförderer kann oder die mehreren weitern einspurigen Zulaufförderer können jeweils eine Transportoberfläche umfassen.

Der weitere einspurige Zulaufförderer oder die mehreren weiteren einspurigen Zulaufförderer kann/können einen Zuführlängenbereich umfassen, entlang dem Behälter von dem weiteren einspurigen Zulaufförderer oder den mehreren weiteren einspurigen Zulaufförderer dem Massenstromförderer zuführbar sind, wobei der Zuführlängenbereich eine Länge aufweisen kann, die mindestens doppelt so groß ist wie eine Förderbreite der Behälterzuführvorrichtung. Diese Förderbreite der Behälterzuführvorrichtung kann sich dabei aus der Summe der Förderbreiten (eine Förderbreite kann beispielsweise eine Breite der jeweiligen Transportoberfläche sein) des mindestens einspurigen Einlaufförderers, der ersten Förderer, der zweiten Förderer und des weiteren einspurigen Zulaufförderers oder der mehreren weiteren einspurigen Zulaufförderer zusammensetzen. Zu der Förderbreite der Behälterzuführvorrichtung können neben dieser Summe der Förderbreiten auch mögliche Abstände zwischen dem mindestens einspurigen Einlaufförderer und der ersten Gruppe, zwischen der ersten Gruppe und der zweiten Gruppe und zwischen der zweiten Gruppe und dem/den weiteren einspurigen Zulaufförderer hinzugezählt werden. Zu der Förderbreite der Behälterzuführvorrichtung können auch mögliche Abstände zwischen den ersten Förderern, zwischen den zweiten Förderern und, wenn vorhanden, zwischen den mehreren weiteren einspurigen Zulaufförderer hinzugezählt werden. Die Breite kann in einer Ebene der Transportoberflächen senkrecht zur ersten oder zweiten Richtung gemessen werden.

Die Länge des Zuführlängenbereichs kann entlang der ersten oder zweiten Richtung gemessen werden. Der Zuführlängenbereich kann sich entlang eines Teils der Transportoberfläche des weiteren einspurigen Zulaufförderers erstrecken. Da die Länge des Zuführlängenbereichs mindestens doppelt so groß ist wie eine Förderbreite der Behälterzuführvorrichtung können die Behälter an den Massenstromförderer abgegeben werden, ohne dass sich ein hoher Staudruck zwischen den Behältern ausbildet.

Oberhalb einer Transportoberfläche des mindestens einspurigen Einlaufförderers und oberhalb zumindest einiger Transportoberflächen der mehreren parallel angeordneten ersten Förderer ist ein Geländer mit Abweisern vorgesehen.

Der Ausdruck "oberhalb" kann hier und im Weiteren zudem umfassen, dass das Geländer nicht nur in einem Bereich vorgesehen sein kann, in dem eine physikalische Kontaktierung mit den Behältern, beispielsweise in einem Einwirkbereich auf die Behälter, auftreten kann, sondern auch in einem Bereich, in dem keine physikalische Kontaktierung mit den Behältern auftreten kann (das Geländer kann dann außerhalb eines Einwirkbereichs auf die Behälter vorhanden sein). Eine physikalische Kontaktierung kann erfolgen, wenn der Behälter, zumindest teilweise, das Geländer, zumindest teilweise, kontaktiert.

Das Geländer kann mehrere Schichten umfassen, die Fischschuppen ähnlich zumindest teilweise überlappend angeordnet sein können. Durch die zumindest teilweise Überlappung kann ein Abweiser oder können mehrere Abweiser ausgebildet werden.

Die Abweiser dieses Geländers können gleiche oder verschiedene Querschnittsformen aufweisen, beispielsweise je nach dem, an welcher Position des Geländers sie vorgesehen sind, beispielsweise können die Abweiser näher am mindestens einspurigen Einlaufförderer kleinere Dimensionen aufweisen als die Abweiser, die weiter weg von dem mindestens einspurigen Einlaufförderer vorgesehen sind. Ein Querschnitt eines Abweisers, und somit seine Querschnittsform, kann einer Ebene parallel zur Förderoberfläche des mindestens einspurigen Einlaufförderers ermittelt werden.

Die Abweiser können entlang des Geländers, beispielsweise in einer Längsrichtung des Geländers, in gleichen oder verschieden Abständen vorgesehen sein. Mittels der Abweiser im Geländer können die Behälter ohne Druck bzw. mit wenig Druck von den nachfolgenden Behältern von dem einspurigen Einlauf auf die mehreren parallel angeordneten ersten Förderer verteilt werden.

Ein Abweiser kann derart ausgebildet sein, dass er in einem flachen Winkel von dem Geländer abgeht, das beispielsweise einen geraden oder einen gebogenen Verlauf umfasst, und in einem steilen Winkel zurückführt. Durch den flachen Winkel kann vermieden werden, dass Behälter, die in Kontakt mit einem Abweiser kommen, umkippen und/oder dass ein auf die Behälter wirkender Druck (Staudruck und/oder Förderdruck) zu groß wird. Beispielsweise kann erreicht werden, dass eine Kraft von 50 N bis 80 N nicht überschritten wird. Durch den steilen Winkel kann den Behältern, die den Abweiser passiert haben, genügend Raum gegeben werden, um sich gegebenenfalls in einen Bereich hinter dem Abweiser zu bewegen.

Sind beispielsweise fünf erste Förderer vorgesehen kann das Geländer mit den Abweisern, bei Blick in die erste Richtung, zunächst gerade entlang einer ersten Seite (z.B. rechten Seite) des mindestens einspurigen Einlaufförderers verlaufen, dann schräg mittels dreier Abweiser über den mindestens einspurigen Einlaufförderer, danach gerade entlang einer ersten Seite (z.B. rechten Seite) des ersten der ersten Förderer, mittels eines Abweisers dann teilweise schräg über den ersten der ersten Förderer, dann gerade entlang der Mitte des ersten der ersten Förderer, danach mittels eines Abweisers teilweise schräg über den zweiten der ersten Förderer. Das Geländer mit den Abweisern ist beispielsweise nicht oberhalb einer Transportoberfläche der dritten bis fünften der ersten Förderer vorgesehen. Dort kann ein anderes Geländer oder dergleichen oder eine andersartige Ablenkvorrichtung vorgesehen sein.

Am Ende zumindest einiger der mehreren parallel angeordneten ersten Förderer und am Anfang zumindest einiger der mehreren parallel angeordneten zweiten Förderer ist oberhalb der Transportoberflächen ein konkav ausgebildetes Geländer vorgesehen, wobei beispielsweise das konkav ausgebildete Geländer eine Kurve umfasst, die einen Winkel beschreibt, der in einem Winkelbereich von 165° bis 195° liegen kann.

Beispielsweise kann eine 180°-Kurve vorgesehen sein.

Durch die Kurve kann die Abgabe der Behälter von der zweiten Gruppe oder von dem weiteren einspurigen Zulaufförderer an den Massenstromförderer, also beispielsweise das Füllen des Massenstromförderers, von dem durch den mindestens einspurigen Einlaufförderer einlaufendem Behälterstrom entkoppelt werden. Größere Druckbelastungen auf Behälter durch einen Rückstau in den mindestens einspurigen Einlaufförderer können vermieden werden.

Wenn fünf erste und fünf zweite Förderer vorgesehen sind, kann das konkav ausgebildete Geländer oberhalb der Transportoberflächen der zweiten bis fünften erste Förderer und der ersten bis fünften zweiten Förderer vorgesehen sein.

Das Geländer mit den Abweisern geht in das konkav ausgebildete Geländer über. So kann ein störungsfreier Transport von Behältern gewährleistet werden, die von einem Bereich des Geländers mit den Abweisern in einen Bereich des konkav ausgebildeten Geländers gelangen.

Oberhalb der Transportoberfläche am Ende des weiteren einspurigen Zulaufförderers oder oberhalb der Förderflächen an den Enden der mehreren weiteren einspurigen Zulaufförderer (wenn dieser/diese in der Behälterzuführvorrichtung vorgesehen ist/sind) kann ein weiteres konkaves Geländer vorgesehen sein, wobei beispielsweise das weiter konkav ausgebildete Geländer in das konkav ausgebildete Geländer übergeht, wobei beispielsweise das weitere konkave Geländer eine Kurve umfasst, die einen Winkel beschreibt, der in einem Winkelbereich von 75° bis 105° liegen kann.

Beispielsweise kann eine 90°-Kurve vorgesehen sein.

Durch das weitere konkave Geländer können Behälter, die von dem weiteren einspurigen Zulaufförderer oder den mehreren weiteren einspurigen Zulaufförderer an den Massenstromförderer abgegeben werden, auch gut in einen Bereich des Massenstromförderers abgegeben werden, der dem Ende des weiteren einspurigen Zulaufförderers oder den Enden der mehreren weiteren einspurigen Zulaufförderer gegenüberliegt.

Oberhalb der Transportoberflächen der erste und der zweiten Gruppe kann zwischen der ersten Gruppe und der zweiten Gruppe ein gerades Geländer vorgesehen sein, das derart ausgebildet ist, dass ein Übergangsbereich für Behälter zwischen der ersten Gruppe und der zweiten Gruppe vorhanden sein kann.

Durch das gerade Geländer kann verhindert werden, dass Behälter unbeabsichtigt von der ersten Gruppe zu der zweiten Gruppe gelangen.

Der Übergangsbereich ist für einen beabsichtigten Übergang von Behältern zwischen der ersten Gruppe und der zweiten Gruppe vorgesehen; in dem Übergangsbereich ist das gerade Geländer nicht vorhanden. Der Übergangsbereich für Behälter zwischen der ersten Gruppe und der zweiten Gruppe kann einen Abstand, der kleiner als ein Durchmesser eines Behälters sein kann, zwischen der ersten und zweiten Gruppe umfassen oder ein Überschubblech mit einer Breite, die kleiner als ein Durchmesser eines Behälters sein kann.

Oberhalb der Transportoberflächen der mehreren parallel angeordneten zweiten Förderer kann ein Geländer mit Stufen vorgesehen sein, wobei beispielsweise das Geländer mit den Stufen den Übergangsbereich für Behälter frei lässt. Durch die Stufen können die Behälter ohne bzw. mit wenig Druck von den mehreren parallel angeordneten zweiten Förderern zum Massenstromförderer hingeleitet werden.

Eine Stufe kann derart ausgebildet sein, dass sie in einem flachen Winkel von dem Geländer abgeht, das beispielsweise einen geraden oder einen gebogenen Verlauf umfasst, und an dessen Ende der Stufe sich das Geländer fortsetzt. Durch den flachen Winkel kann vermieden werden, dass Behälter, die in Kontakt mit einem Abweiser kommen, umkippen und/oder dass ein auf die Behälter wirkender Druck (Staudruck und/oder Förderdruck) zu groß werden.

Durch das Geländer mit den Stufen können Behälter entlang der, schräg entlang der und/oder quer zu den zweiten Förderern bewegt werden. Die Behälter können so auf den letzten der zweiten Förderer verbracht werden, und von dort beispielsweise an den Massenstromförderer oder an den weiteren einspurigen Zulaufförderer oder die mehreren weiteren einspurigen Zulaufförderer übergeben werden.

Wenn fünf zweite Förderer vorgesehen sind, kann sich das Geländer mit den Stufen von dem ersten bis zum fünften zweiten Förderer erstrecken. Das Geländer kann dabei schräg über den ersten der zweiten Förderer verlaufen, im Übergang vom ersten zum zweiten der zweiten Förderer kann eine Stufe vorgesehen sein, danach kann das Geländer von der Mitte des zweiten der zweiten Förderer zur Mitte des dritten der zweiten Förderer verlaufen, dann kann eine Stufe im Übergang vom dritten zum vierten der zweiten Förderer vorgesehen sein und danach kann das Geländer bis zur Mitte des fünften der zweiten Förderer verlaufen.

Das gerade Geländer kann in das Geländer mit den Stufen übergehen. So kann ein störungsfreier Transport von Behältern gewährleistet werden, die von einem Bereich des geraden Geländers in einen Bereich des Geländers mit den Stufen gelangen.

Der Übergangsbereich, entlang der ersten oder der zweiten Richtung gesehen, kann eine Länge aufweisen, deren Wert um einen Faktor 1,8 bis 3 oder um einen Faktor 1,5 bis 4 (die Bereichsgrenzen sind miteingeschlossen) größer ist als ein Wert einer Förderbreite der ersten Gruppe oder der zweiten Gruppe. Durch diese Länge des Übergangsbereichs kann ein lockerer Transport der Behälter stattfinden.

Der mindestens einspurige Einlaufförderer und/oder die mehreren parallel angeordneten ersten Förderer und/oder die mehreren parallel angeordneten zweiten Förderer und/oder der weitere einspurige Zulaufförderer oder die mehreren weiteren einspurigen Zulaufförderer (wenn in der Behälterzuführvorrichtung vorhanden) können jeweils Transportoberflächen umfassen, die koplanar in einer Ebene angeordnet sind, wobei die Ebene mit einer zur Wirkrichtung der Schwerkraft senkrechten Ebene einen Winkel von 0,5° bis 14° (die Bereichsgrenzen sind miteingeschlossen) einschließen kann, oder beispielsweise einen Winkel von 0,5° bis 11°, oder beispielsweise einen Winkel von 0,5° bis 8°.

Durch die koplanare Anordnung der jeweiligen Transportoberflächen in einer Ebene ist der Übergang von Behältern zwischen den verschiedenen Förderern möglich.

Die koplanare Anordnung kann auch vorhanden sein, ohne dass die Ebene mit einer zur Wirkrichtung der Schwerkraft senkrechten Ebene einen Winkel von 0,5° bis 14° einschließt, beispielsweise wenn der Winkel 0° beträgt.

Dadurch, dass die Ebene mit der zur Wirkrichtung der Schwerkraft senkrechten Ebene einen Winkel von 0,5° bis 14° einschließen kann, oder beispielsweise einen Winkel von 0,5° bis 11°, oder beispielsweise einen Winkel von 0,5° bis 8°, kann die auf die Behälter zusätzlich die Hangabtriebskraft wirken.

Die hier und auch weiter unten erwähnten Wertebereiche für einen Winkel, den die Ebene, in der sich die jeweiligen Transportoberflächen befinden, mit einer zur Wirkrichtung der Schwerkraft senkrechten Ebene einschließen kann, können unter Berücksichtigung einer zu transportierenden Behälterart gewählt oder festgelegt werden. Zu transportierende Behälter können trotz des eingeschlossenen Winkels standsicher transportiert werden. Trotz des eingeschlossenen Winkels sollte ein Umkippen der Behälter oder ein nicht standsicherer Transport vermieden werden. Bei einer Behälterart können eine Höhe des Schwerpunkts des Behälters über der Transportoberfläche und/oder eine Standfläche des Behälters auf der Transportoberfläche und/oder eine Steifigkeit des Behälters und/oder ein Gewicht des Behälters für eine Wahl oder ein Festlegen des Winkels berücksichtigt werden. Für PET-Flaschen, beispielsweise 1,5l-PET-Flaschen, kann die Ebene der Transportoberflächen mit der zur Wirkrichtung der Schwerkraft senkrechten Ebene einen Winkel von 0,5° bis 2° einschließen. Für Dosen, beispielsweise Metall- oder Kompositdosen, kann die Ebene der Transportoberflächen mit der zur Wirkrichtung der Schwerkraft senkrechten Ebene einen Winkel von 1° bis 5° einschließen. Für Glas-Flaschen, beispielsweise 0,5l-Bierflaschen oder 1l-Softdrink-Flaschen, kann die Ebene der Transportoberflächen mit der zur Wirkrichtung der Schwerkraft senkrechten Ebene einen Winkel von 3° bis 8° einschließen.

Der Winkel, den die Ebene der Transportoberflächen mit der zur Wirkrichtung der Schwerkraft senkrechten Ebene einschließt, kann so groß wie möglich und so klein wie nötig gewählt oder festgelegt werden.

Das Geländer mit den Abweisern, das konkav ausgebildete Geländer, das gerade Geländer, das Geländer mit den Stufen und/oder das weitere konkav ausgebildete Geländer (falls es in der Behälterzuführvorrichtung vorgesehen ist) können ebenfalls geneigt angeordnet sein und mit einer zur Wirkrichtung der Schwerkraft senkrechten Ebene einen Winkel einschließen, der in einem Bereich von 0,5° bis 14° liegen kann (Bereichsgrenzen miteingeschlossen) , oder beispielsweise in einem Bereich von 0,5° bis 11°, oder beispielsweise einem Bereich von 0,5° bis 8°.

Die Behälterzuführung kann auf einer Tragestruktur oder mehreren Tragstrukturen oder dergleichen angeordnet sein und beispielsweise einen Kippmechanismus oder mehrere Kippmechanismen umfassen. Die Tragestruktur oder die Tragestrukturen können mit dem Kippmechanismus oder mit den Kippmechanismen verbunden sein, so dass mittels des Kippmechanismus' oder den Kippmechanismen der Winkel veränderbar und/oder einstellbar ist. Der Kippmechanismus oder die Kippmechanismen können mit einer oder mehreren Steuerungsvorrichtungen gesteuert werden. Die eine oder die mehreren Steuerungsvorrichtungen des Kippmechanismus oder der Kippmechanismen können auch zur Steuerung von Antriebsgeschwindigkeiten der Förderer vorgesehen sein, oder die eine oder die mehreren Steuerungsvorrichtungen des Kippmechanismus' oder der Kippmechanismen kann/können unabhängig von einer Steuerungsvorrichtung zur Steuerung von Antriebsgeschwindigkeiten der Förderer vorgesehen sein.

Die Behälterzuführvorrichtung kann weiter eine Steuerungsvorrichtung zur Steuerung von Antriebsgeschwindigkeiten der Förderer umfassen, wobei beispielsweise eine Steuerung vorgesehen sein kann, bei der der mathematische Betrag von Antriebsgeschwindigkeiten ausgehend von dem mindestens einspurigen Einlaufförderer zu den mehreren parallel angeordneten ersten Förderer in die erste Richtung jeweils abnimmt, wobei der mathematische Betrag von Antriebsgeschwindigkeiten der mehreren parallel angeordneten zweiten Förderern in die zweite Richtung zunächst zunimmt und dann wieder abnimmt und/oder wobei der mathematische Betrag einer Antriebsgeschwindigkeit des weiteren einspurigen Zulaufförderers (wenn in der Behälterzuführvorrichtung vorhanden) in die erste Richtung der kleinste der mathematischen Beträge ist oder wobei die mathematischen Beträge von Antriebsgeschwindigkeiten der mehreren weiteren einspurigen Zulaufförderer in die erste Richtung jeweils kleiner sind als ein Betrag der Antriebsgeschwindigkeit des langsamsten der mehreren parallel angeordneten zweiten Förderern.

Beispielsweise kann eine Abstufung der verschiedenen Antriebsgeschwindigkeiten zueinander nicht-linear sein. Die Abstufungen können zueinander jeweils prozentual sein oder jeweils einen Faktor betragen.

Die Antriebsgeschwindigkeit des mindestens einspurigen Einlaufförderers kann als Randbedingung für die Antriebsgeschwindigkeiten der anderen Förderer (erste Förderer, zweite Förderer, weiterer/weitere einspurige Zulaufförderer) dienen. Es kann vorgesehen sein, dass derjenige Förderer, der vor dem Massenförderer angeordnet ist, höchstens mit einer maximalen Antriebsgeschwindigkeit betrieben wird. Es kann vorgesehen sein, dass diese maximale Antriebsgeschwindigkeit nicht überschritten wird, um eine Abgabe der Behälter von demjenigen Förderer, der vor dem Massenförderer angeordnet ist, an den Massenförderer zu ermöglichen.

Wird die Antriebsgeschwindigkeit des mindestens einspurigen Einlaufförderers erhöht/verringert, so können auch die Antriebsgeschwindigkeiten der nachfolgenden Förderer (erste Förderer, zweite Förderer, weiterer/weitere einspurige Zulaufförderer) jeweils erhöht/verringert werden. Die jeweiligen Erhöhungen/Verringerungen können nicht-linear erfolgen. Beispielsweise können die Antriebsgeschwindigkeiten prozentual erhöht/verringert werden oder die Antriebsgeschwindigkeiten können jeweils verdoppelt/halbiert werden.

Die Antriebsgeschwindigkeiten des mindestens einspurigen Einlaufförderers können zwischen 0,05 m/s (beispielsweise bei einer Leistung von 4500 Behälter pro Stunde bei einem Behälterdurchmesser von 35 - 40 mm) und 5 m/s (beispielsweise bei einer Leistung von 225000 Behältern pro Stunde bei einem Behälterdurchmesser von 75 - 80 mm) liegen. Alternativ oder zudem können die Antriebsgeschwindigkeiten des mindestens einspurigen Einlaufförderers zwischen 0,15 m/s (beispielsweise bei einer Leistung von 10000 Behältern pro Stunde bei einem Behälterdurchmesser von 50 - 53 mm) und 3,5 m/s (beispielsweise bei einer Leistung von 180000 Behältern pro Stunde bei einem Behälterdurchmesser von 64 - 66 mm) liegen.

Als Beispiel für die unterschiedlichen Antriebsgeschwindigkeiten sei folgendes Beispiel angegeben: Für den mindestens einspurigen Einlaufförderer kann 1,7 m/s vorgesehen sein. Für beispielsweise fünf erste Förderer einer ersten Gruppe können 0,85 m/s, 0,6 m/s, 0,55 m/s und 0,25 m/s vorgesehen sein. Für beispielsweise fünf zweite Förderer einer zweiten Gruppe können 0,15 m/s, 0,35 m/s, 0,4 m/s, 0,35 m/s und 0,15 m/s vorgesehen sein. Ist der weitere einspurige Zulaufförderer vorhanden, so kann für ihn 0,08 m/s vorgesehen sein. Beispielsweise kann der mathematische Betrag einer Antriebsgeschwindigkeit des Massenstromförderers 0,0156 m/s betragen.

Die Steuervorrichtung kann zudem oder alleinig dazu ausgebildet sein, einen Betrag der Antriebsgeschwindigkeit des mindestens einspurigen Einlaufförderers derart zu steuern, dass der mindestens einspurige Einlaufförderer Behälter in einer Anzahl pro Zeiteinheit in die erste Richtung transportiert, die der Anzahl pro der Zeiteinheit einer der thermischen Behälterzuführvorrichtung vorgeordneten Vorrichtung entspricht. Die Vorrichtung kann der thermischen Behälterzuführvorrichtung direkt vorgeordnet sein, wobei beispielsweise zwischen der vorgeordneten Vorrichtung und der thermischen Behälterzuführvorrichtung lediglich ein oder mehrere Förderer angeordnet sein können. Beispielsweise kann die Steuervorrichtung derart ausgebildet sein, dass sie Informationen und/oder Daten der vorgeordneten Vorrichtung erhält, die die Anzahl pro der Zeiteinheit umfassen.

Die thermische Behälterzuführvorrichtung kann derart ausgebildet sein, dass genau ein einspuriger Einlaufförderer vorgesehen sein kann.

Alternativ kann die thermische Behälterzuführvorrichtung derart ausgebildet sein, dass zwei oder mehr einspurige Einlaufförderer vorgesehen sein können.

Der mindestens einspurige Einlaufförderer, die ersten Förderer der ersten Gruppe, die zweiten Förderer der zweiten Gruppe und der eine oder die mehreren einspurigen Zulaufförderer können jeweils parallel oder im Wesentlichen parallel zueinander verlaufen. Die zuvor erwähnten Förderer können derart ausgebildet sein, dass sowohl ein Betrag der Antriebsgeschwindigkeit als auch die Richtung der Antriebsgeschwindigkeit veränderbar sind. Diese Förderer können in die erste und in die zweite Richtung antreibbar ausgebildet sein.

Beispielsweise ist nicht vorgesehen, dass ein Förderer, der von der weiter oben oder weiter unten beschriebenen thermischen Behälterzuführvorrichtung umfasst sein kann, und Behälter in eine n. Richtung transportieren kann, eine oder mehrere Kurven beschreiben kann und die Behälter danach in eine m. Richtung transportieren kann, wobei die n. und die m. Richtung zueinander entgegengesetzt sind. Dies gilt ebenso für mehrere Förderer, die von der weiter oben oder weiter unten beschriebenen thermischen Behälterzuführvorrichtung umfasst sein können. Der eine oder die mehreren Förderer können umfassen oder sein: der mindestens einspurige Einlaufförderer, einer oder mehrere der ersten Förderer der ersten Gruppe, einer oder mehrere der zweiten Förderer der zweiten Gruppe, der weitere oder einer der mehreren oder mehrere der mehreren weiteren einspurigen Zulaufförderer.

Die thermische Behandlungsvorrichtung kann ein Behandlungsdeck umfassen. In dem einen Behandlungsdeck kann der Massenstromförderer (hier einer) angeordnet sein. Bei nur einem Behandlungsdeck ist eine Behälterzuführvorrichtung ausreichend, um die Behälter von der Behälterzuführvorrichtung dem einen Massenstromförderer des Behandlungsdecks zuzuführen.

Alternativ kann die thermische Behandlungsvorrichtung zwei oder mehr Behandlungsdecks und entsprechend zwei oder mehr der Behälterzuführvorrichtung umfassen. Die Behandlungsdecks können in einer Wirkrichtung der Schwerkraft übereinander angeordnet sein. Sind beispielsweise drei Behandlungsdecks in der thermischen Behandlungsvorrichtung vorhanden, so kann in den Behandlungsdecks jeweils ein Massenstromförderer angeordnet sein, so dass insgesamt drei Massenstromförderer vorgesehen sein können. Um Behälter den jeweiligen Massenstromförderern der drei Behandlungsdecks zuführen zu können, können entsprechend drei Behälterzuführvorrichtung vorgesehen sein.

Die thermische Behandlungsvorrichtung kann weiter eine weitere Steuerungsvorrichtung zur Steuerung einer Geschwindigkeit des Massenstromförderers umfassen. Die Geschwindigkeit des Massenstromförderers kann in Abhängigkeit von den Antriebsgeschwindigkeiten gesteuert werden oder die Geschwindigkeit des Massenstromförderers kann fest vorgegeben sein. Die Antriebsgeschwindigkeiten können mittels der Steuerungsvorrichtung in Abhängigkeit von der Geschwindigkeit des Massenstromförderers gesteuert werden. Sind mehrere Massenstromförderer vorgesehen, so kann die weitere Steuerungsvorrichtung zur Steuerung der jeweiligen Geschwindigkeiten der mehreren Massenstromförderer vorgesehen sein. Die jeweiligen Geschwindigkeiten können unabhängig voneinander für die mehreren Massenstromförderer steuerbar sein oder für alle der mehreren Massenstromförderer kann eine einzige Geschwindigkeit gesteuert werden.

Die Steuerungsvorrichtung und die weitere Steuerungsvorrichtung können auch als eine gemeinsame Steuerungsvorrichtung ausgebildet sein.

Die Erfindung betrifft weiter das Verfahren zum Betreiben der thermischen Behandlungsvorrichtung wie oben oder weiter unten beschrieben.

In dem Verfahren kann eine Steuerung der Behälterzuführvorrichtung mittels der Steuervorrichtung erfolgen und/oder es kann eine Steuerung des Massenstromförderers mittels der weiteren Steuerungsvorrichtung erfolgen.

Erfolgt eine Steuerung der Behälterzuführvorrichtung mittels der Steuervorrichtung, kann bei einer Steuerung der mathematische Betrag der Antriebsgeschwindigkeit des mindestens einspurigen Einlaufförderers in die erste Richtung in einem Bereich von 0,05 m/s bis 3,5 m/s liegen. Weiter kann dabei vorgesehen sein, dass der mathematische Betrag von Antriebsgeschwindigkeiten ausgehend von dem mindestens einspurigen Einlaufförderer zu den mehreren parallel angeordneten ersten Förderern in die erste Richtung jeweils abnimmt, wobei der mathematische Betrag von Antriebsgeschwindigkeiten der mehreren parallel angeordneten zweiten Förderer in die zweite Richtung zunächst zunimmt und dann wieder abnimmt und/oder wobei der mathematische Betrag einer Antriebsgeschwindigkeit des weiteren einspurigen Zulaufförderers (wenn in der Behälterzuführvorrichtung vorhanden) in die erste Richtung der kleinste der mathematischen Beträge ist oder wobei die mathematischen Beträge von Antriebsgeschwindigkeiten der mehreren weiteren einspurigen Zulaufförderer in die erste Richtung jeweils kleiner sind als ein Betrag der Antriebsgeschwindigkeit des langsamsten der mehreren parallel angeordneten zweiten Förderern.

Beispielsweise kann bei einer Steuerung der mathematische Betrag der Antriebsgeschwindigkeit des mindestens einspurigen Einlaufförderers in die erste Richtung in einem Bereich von 1,5 m/s bis 1,9 m/s liegen, wobei der mathematische Betrag der Antriebsgeschwindigkeiten der mehreren parallel angeordneten ersten Förderer in die erste Richtung von 0,65 m/s bis 1,05 m/s auf 0,05 m/s bis 0,45 m/s abnehmen kann, wobei der mathematische Betrag der Antriebsgeschwindigkeiten der mehreren parallel angeordneten zweiten Förderern in die zweite Richtung zunächst von 0,01 m/s bis 0,35 m/s zu 0,2 m/s bis 0,6 m/s zunehmen und dann wieder von 0,15 m/s bis 0,55 m/s zu 0,01 m/s bis 0,35 m/s abnehmen kann und/oder wobei der mathematische Betrag einer Antriebsgeschwindigkeit des weiteren einspurigen Zulaufförderers (wenn in der Behälterzuführvorrichtung vorhanden) in die erste Richtung der kleinste der mathematischen Beträge mit 0,06 m/s bis 0,1 m/s sein kann. Die angegebenen Bereichsgrenzen sind jeweils miteingeschlossen.

Die Werte der mathematischen Beträge wie weiter oben angegeben, können auch hier für die Steuerung vorgesehen sein.

Für die Antriebsgeschwindigkeiten kann das bereits weiter oben Erläuterte gelten.

### Kurze Figurenbeschreibung

Die beigefügten Figuren dienen zum besseren Verständnis und zur Veranschaulichung von Aspekten der Erfindung. Dabei zeigt:
Figur 1 eine Draufsicht auf eine schematische Ansicht einer ersten Ausführungsform einer Behälterzuführvorrichtung,
Figur 2 eine Draufsicht auf eine schematische Ansicht einer zweiten Ausführungsform einer Behälterzuführvorrichtung,
Figur 3 eine Seitenansicht der Figur 1 mit Blick in die zweite Richtung, wobei die Transportoberflächen geneigt angeordnet sind,
Figur 4 eine Seitenansicht der Figur 2 mit Blick in die zweite Richtung, wobei die Transportoberflächen geneigt angeordnet sind,
Figur 5 eine Draufsicht auf eine schematische Ansicht der zweiten Ausführungsform der Behälterzuführvorrichtung in der eine Behälterverteilung zu einem gegebenen Zeitpunkt dargestellt ist,
Figur 6 eine Schrägansicht einer thermischen Behandlungsvorrichtung mit zwei Behandlungsdecks und zwei Behälterzuführvorrichtung, die horizontal ausgerichtet sind und
Figur 7 eine Schrägansicht einer thermischen Behandlungsvorrichtung mit zwei Behandlungsdecks und zwei Behälterzuführvorrichtung, die geneigt ausgerichtet sind.

### Figurenbeschreibung

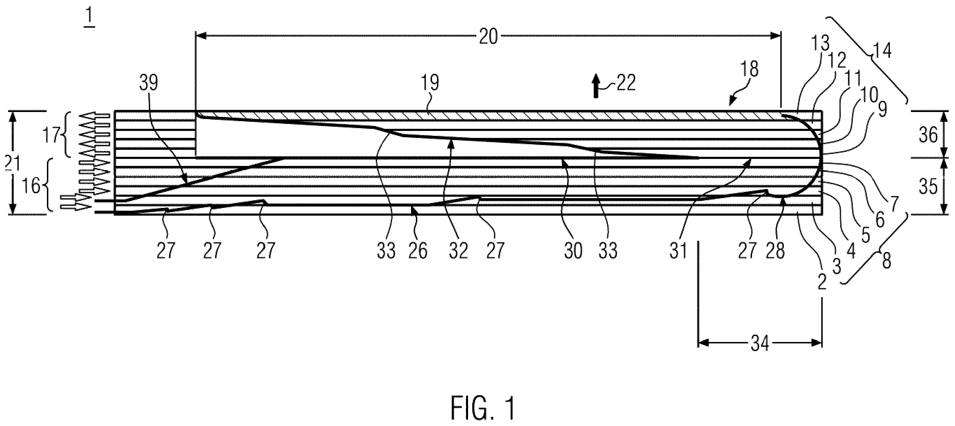

Die Figur 1 zeigt eine Draufsicht auf eine schematische Ansicht einer ersten Ausführungsform einer Behälterzuführvorrichtung 1 zum Zuführen von Behältern zu einem Massenstromförderer 18. Der Massenstromförderer 18 ist im Allgemeinen nicht von der Behälterzuführungsvorrichtung 1 umfasst, er kann jedoch auch von ihr umfasst sein.

Die Behälterzuführvorrichtung 1 umfasst einen mindestens einspurigen Einlaufförderer 2 (hier einspurig dargestellt und daher im Weiteren als einspuriger Einlaufförderer bezeichnet), der in eine erste Richtung 16 antreibbar ist und beispielsweise auf seiner Transportoberfläche transportierte Behälter in die erste Richtung fördern kann.

Parallel anschließend an den einspurigen Einlaufförderer 2 ist eine erste Gruppe 8 von mehreren parallel angeordneten ersten Förderern 3, 4, 5, 6, 7 vorgesehen, die jeweils in die erste Richtung 16 antreibbar sind. Auf den jeweiligen Transportoberflächen der ersten Förderer 3-7 können Behälter in die erste Richtung 16 gefördert werden.

Parallel anschließend an die erste Gruppe 8 ist eine zweite Gruppe 14 von mehreren parallel angeordneten zweiten Förderern 9, 10, 11, 12, 13 vorgesehen, die jeweils in eine zweite Richtung 17 antreibbar sind. Auf den jeweiligen Transportoberflächen der zweiten Förderer 9-13 können Behälter in die zweite Richtung 17 gefördert werden. Die erste und zweite Richtung 16, 17 sind zueinander entgegengesetzt.

Oberhalb einer Transportoberfläche des einspurigen Einlaufförderers 2 und der Transportoberflächen des ersten und zweiten der ersten Förderern 3, 4 ist ein Geländer 26 mit fünf Abweisern 27 angeordnet. Diese Geländer 26 geht oberhalb der Transportoberfläche des Endes des zweiten der ersten Förderer 4 in ein konkav ausgebildetes Geländer 28 über, das am Ende des zweiten, dritten, vierten und fünften der ersten Förderer 4-7 und am Anfang des ersten bis fünften der zweiten Förderer 9-13 oberhalb der Transportoberflächen vorgesehen ist. Hier umfasst das konkav ausgebildete Geländer 28 eine Kurve, die einen Winkel von 180° beschreibt.

Oberhalb der Transportoberflächen der ersten und der zweiten Gruppe 8, 14 ist zwischen der ersten Gruppe 8 und der zweiten Gruppe 14 ein gerades Geländer 30 vorgesehen, das derart ausgebildet ist, dass ein Übergangsbereich 31 für Behälter zwischen der ersten Gruppe 8 und der zweiten Gruppe 14 vorhanden ist. Oberhalb der Transportoberflächen der ersten und der zweiten Gruppe 8, 14 zwischen der ersten Gruppe 8 und der zweiten Gruppe 14 kann dabei bedeuten oberhalb zwischen der Transportoberfläche des letzten der ersten Förderer 7 und des ersten der zweiten Förderer 9.

Der Übergangsbereich 31, entlang der ersten oder zweiten Richtung 16, 17 gesehen, weist eine Länge 34 auf, deren Wert um einen Faktor 1,8 bis 3 größer ist als ein Wert einer Förderbreite 35, 36 der ersten oder zweiten Gruppe 8, 14.

Oberhalb der Transportoberflächen der mehreren parallel angeordneten zweiten Förderern 9-13 ist ein Geländer 32 mit zwei Stufen 33 vorgesehen, das den Übergangsbereich 31 für die Behälter frei lässt. Das gerade Geländer 30 geht in das Geländer 32 mit den zwei Stufen 33 über.

Oberhalb der Transportoberflächen der mehreren parallel angeordneten ersten Förderer 3-7 ist ein weiteres gerades Geländer 39 angeordnet, das sich vom einspurigen Einlaufförderer 2 bis zu dem geraden Geländer 32 erstreckt.

Die Behälter sind von der zweiten Gruppe 14 von mehreren parallel angeordneten zweiten Förderern 9-13 quer zur zweiten Richtung 17 in Richtung 22 zum Massenstromförderer 18 abgebbar. Beispielsweise können die Behälter von dem fünften der zweiten Förderern 13 quer zur zweiten Richtung 17 in Richtung 22 zum Massenstromförderer 18 abgegeben werden.

Ein Abgabebereich 19 (durch die Schraffierung kenntlich gemacht), in dem die Behälter von dem fünften der zweiten Förderern 13 quer zur zweiten Richtung 17 in die Richtung 22 zum Massenstromförderer 18 abgebbar sind, weist eine Länge 20 auf, die mindestens doppelt so groß ist wie eine Förderbreite 21 der Behälterzuführvorrichtung 1. Die Förderbreite 21 setzt sich dabei aus der Summe der Förderbreiten 35, 36 des einspurigen Einlaufförderers 2, der ersten Förderer 3-7 und der zweiten Förderer 9-13 zusammen.

Die Antriebsgeschwindigkeiten des einspurigen Einlaufförderers 2, der ersten Förderer 3-7 und der zweiten Förderer 9-13 können individuell mittels einer (nicht dargestellten) Steuerungsvorrichtung gesteuert werden. Dabei kann der mathematische Betrag von Antriebsgeschwindigkeiten ausgehend vom einspurigen Einlaufförderer 2 zu den mehreren parallel angeordneten ersten Förderern 3-7 jeweils abnehmen, der mathematische Betrag von Antriebsgeschwindigkeiten der mehreren parallel angeordneten zweiten Förderern 9-13 kann zunächst zunehmen und dann wieder abnehmen.

Ein mathematischer Betrag einer Antriebsgeschwindigkeit des Massenstromförderers 18 in die Richtung 22 kann am kleinsten sein.

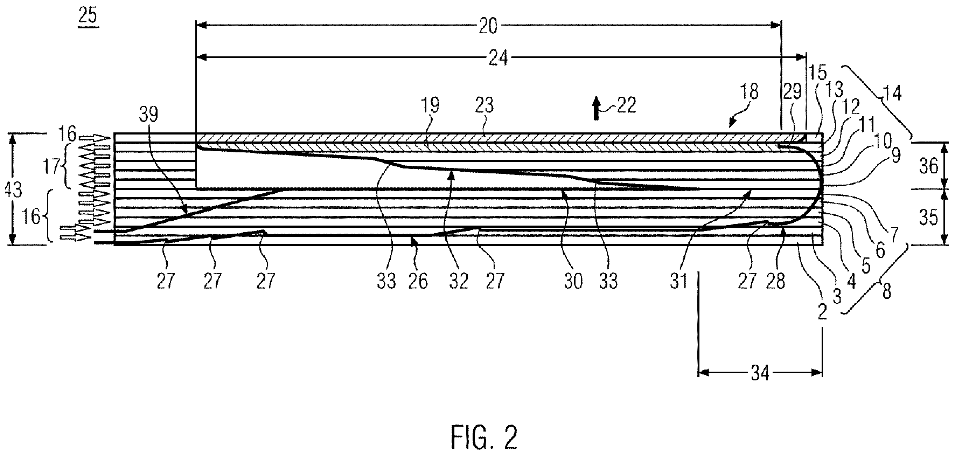

Die Figur 2 zeigt eine Draufsicht auf eine schematische Ansicht einer zweiten Ausführungsform einer Behälterzuführvorrichtung 25. In der Figur 2 sind Elemente der ersten Ausführungsform der Figur 1, die auch in der zweiten Ausführungsform vorkommen mit den gleichen Bezugszeichen benannt. Das bezüglich der ersten Ausführungsform Beschriebene gilt für diese Elemente auch in der zweiten Ausführungsform; lediglich der Übergang zu dem Massenstromförderer 18 von der Behälterzuführvorrichtung 25 ist verschieden zu dem der Behälterzuführvorrichtung 1.

In der zweiten Ausführungsform der Behälterzuführvorrichtung 25 ist parallel anschließend an die zweite Gruppe 14 von mehreren parallel angeordneten zweiten Förderern 9-13 ein weiterer einspuriger Zulaufförderer 15 vorgesehen. Es können auch mehrere weitere jeweils einspurige Zulaufförderer nebeneinander vorgesehen sein, die sich an die zweite Gruppe anschließen. Der weitere einspurige Zulaufförderer 15 ist in die erste Richtung 16 antreibbar und ausgebildet ist, Behälter in die erste Richtung 16 zu fördern, beispielsweise auf einer Transportoberfläche. Behälter von dem weiteren einspurigen Zulaufförderer 15 können quer zur ersten Richtung 17 in die Richtung 22 zum Massenstromförderer 18 abgegeben werden. Entsprechendes gilt für den Fall, dass mehrere weitere einspurige Zulaufförderer vorgesehen sind.

Der weitere einspurige Zulaufförderer 15 umfasst einen Zuführlängenbereich 23 (durch die Schraffierung kenntlich gemacht), entlang dem die Behälter von dem weiteren einspurigen Zulaufförderer 15 dem Massenstromförderer 18 zuführbar sind. Der Zuführlängenbereich 23 weist eine Länge 24 auf, die mindestens doppelt so groß ist wie eine Förderbreite 43 der Behälterzuführvorrichtung 25. Entsprechendes gilt für den Fall, dass mehrere weitere einspurige Zulaufförderer vorgesehen sind.

Diese Förderbreite 43 setzt sich dabei aus der Summe der Förderbreiten des einspurigen Einlaufförderers 2, der ersten Förderer 3-7, der zweiten Förderer 9-13 und des weiteren einspurigen Zulaufförderers 15 oder der mehreren weiteren einspurigen Zulaufförderer zusammen. Die Förderbreiten können senkrecht zur ersten oder zweiten Richtung gemessen werden.

Die Länge 24 des Zuführlängenbereichs 23 kann entlang der ersten oder zweiten Richtung 16, 17 gemessen werden. Der Zuführlängenbereich 23 erstreckt sich entlang eines Teils der Transportoberfläche des weiteren einspurigen Zulaufförderers 15. Da die Länge 24 des Zuführlängenbereichs 23 mindestens doppelt so groß ist wie die Förderbreite 43 der Behälterzuführvorrichtung 25 können die Behälter an den Massenstromförderer 18 abgegeben werden, ohne dass sich ein hoher Staudruck zwischen den Behältern ausbildet.

Oberhalb der Transportoberfläche am Ende des weiteren einspurigen Zulaufförderers 15 ist ein weiteres konkaves Geländer 29 vorgesehen, das eine 90°-Kurve umfasst. Das weitere konkav ausgebildete Geländer 29 geht in das konkav ausgebildete Geländer 28 über.

Durch das weitere konkave Geländer 29 können Behälter, die von dem weiteren einspurigen Zulaufförderer 15 an den Massenstromförderer 18 abgegeben werden, auch gut in einen Bereich des Massenstromförderers 18 abgegeben werden, der dem Ende des weiteren einspurigen Zulaufförderer 15 gegenüberliegt (in der Darstellung der rechte Eckbereich des Massenstromförderers 18).

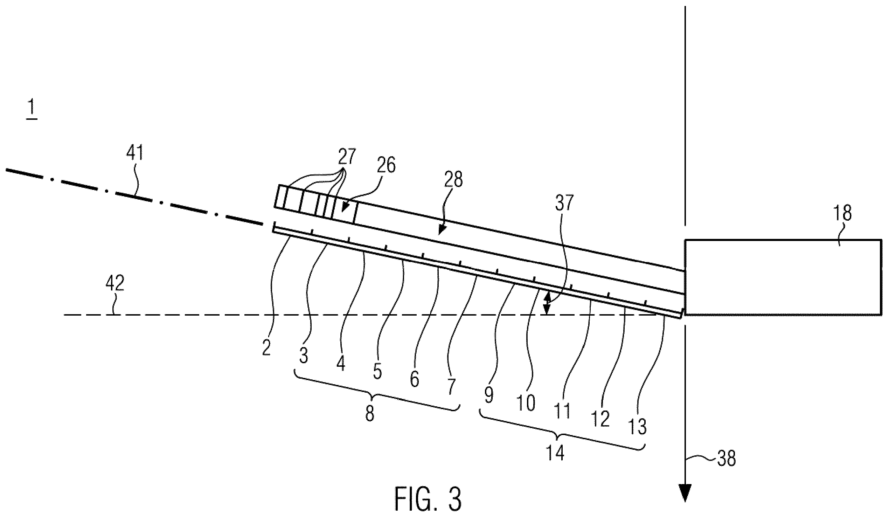

Die Figur 3 zeigt eine Seitenansicht der Figur 1 mit Blick in die zweite Richtung 17, wobei die Transportoberflächen des einspurigen Einlaufförderers 2, der ersten Förderer 3-7 und der zweiten Förderer 9-13 geneigt angeordnet sind. Die Transportoberflächen sind koplanar in einer Ebene 41 angeordnet. Die Ebene 41 schließt mit einer zur Wirkrichtung 38 der Schwerkraft senkrechten Ebene 42 einen Winkel 37 ein, der in einem Bereich von 0,5° bis 14° liegen kann (Bereichsgrenzen miteingeschlossen), oder beispielsweise einen Winkel von 0,5° bis 11°, oder beispielsweise einen Winkel von 0,5° bis 8°.

Das Geländer 26 mit den Abweisern 27, das konkav ausgebildete Geländer 28, das gerade Geländer 30, das Geländer 32 mit den Stufen 33 und das weitere gerade Geländer 39 sind ebenfalls geneigt angeordnet und schließen mit einer zur Wirkrichtung 38 der Schwerkraft senkrechten Ebene 42 einen Winkel ein, der in einem Bereich von 0,5° bis 14° liegen kann (Bereichsgrenzen miteingeschlossen), oder beispielsweise einen Winkel von 0,5° bis 11°, oder beispielsweise einen Winkel von 0,5° bis 8°.

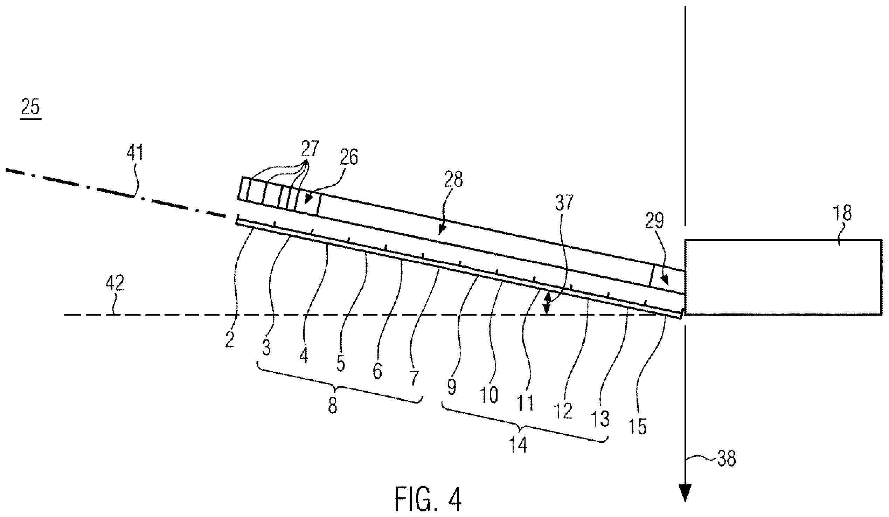

Die Figur 4 zeigt eine Seitenansicht der Figur 2 mit Blick in die zweite Richtung 17, wobei die Transportoberflächen des einspurigen Einlaufförderers 2, der ersten Förderer 3-7, der zweiten Förderer 9-13 und des weiteren einspurigen Zulaufförderers 15 geneigt angeordnet sind. Für den Fall dass mehrere weitere einspurige Zulaufförderer vorgesehen sind, können diese ebenfalls geneigt sein.

Die Transportoberflächen sind koplanar in einer Ebene 41 angeordnet. Die Ebene 41 schließt mit einer zur Wirkrichtung 38 der Schwerkraft senkrechten Ebene 42 einen Winkel 37 ein, der in einem Bereich von 0,5° bis 14° liegen kann (Bereichsgrenzen miteingeschlossen), oder beispielsweise einen Winkel von 0,5° bis 11°, oder beispielsweise einen Winkel von 0,5° bis 8°.

Das Geländer 26 mit den Abweisern 27, das konkav ausgebildete Geländer 28, das gerade Geländer 30, das Geländer 32 mit den Stufen 33, das weitere gerade Geländer 39 und das weitere konkav ausgebildete Geländer 29 sind ebenfalls geneigt angeordnet und schließen mit einer zur Wirkrichtung 38 der Schwerkraft senkrechten Ebene 42 einen Winkel ein, der in einem Bereich von 0,5° bis 14° liegen kann (Bereichsgrenzen miteingeschlossen), oder beispielsweise einen Winkel von 0,5° bis 11°, oder beispielsweise einen Winkel von 0,5° bis 8°.

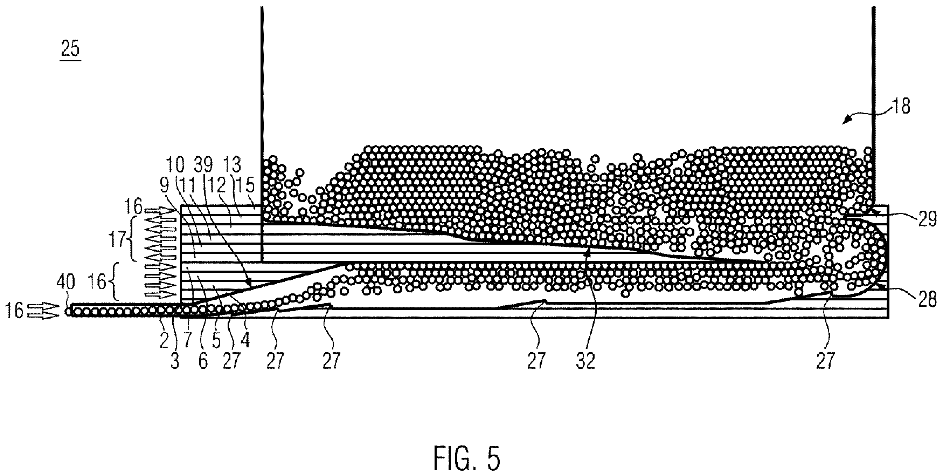

Die Figur 5 zeigt eine Draufsicht auf eine schematische Ansicht der zweiten Ausführungsform der Behälterzuführvorrichtung 25 in der eine Verteilung von Behältern 40 zu einem gegebenen Zeitpunkt dargestellt ist.

Zu erkennen ist, wie Behälter 40, die von dem einspurigen Einlaufförderer 2 kommen durch die Abweiser 27 auf die mehreren ersten Förderer 3-7 verteilt werden. Im Übergangsbereich 31 gelangen die Behälter 40 von der ersten Gruppe 8 zu der zweiten Gruppe 14. Durch die Länge 34 des Übergangsbereichs 31, deren Wert um einen Faktor 1,8 bis 3 größer ist als ein Wert der Förderbreite 35, 36 der ersten Gruppe 8 oder der zweiten Gruppe 14, kann ein lockerer Transport der Behälter stattfinden. Dies wird durch die freien Lücken zwischen den Behältern 40 deutlich.

Mittels des Geländers 32 mit den Stufen 33 können die Behälter 40 ohne Druck von den mehreren parallel angeordneten zweiten Förderern 9-13 zum weiteren einspurigen Zulaufförderer 15 und zum Massenstromförderer 18 hingeleitet werden.

Da sich der weitere einspurige Zulaufförderer 15 in die erste Richtung 16 bewegt, also in die ursprüngliche Einlaufrichtung des einspurigen Einlaufförderers 2, kann eine Verteilung und eine Abgabe der Behälter 40 an den Massenstromförderer 18 verbessert werden. Behälter 40, die von dem weiteren einspurigen Zulaufförderer 15 an den Massenstromförderer 18 abgegeben werden, können auch gut in den Bereich des Massenstromförderers 18 abgegeben werden, der dem Ende des weiteren einspurigen Zulaufförderers 15 gegenüberliegt.

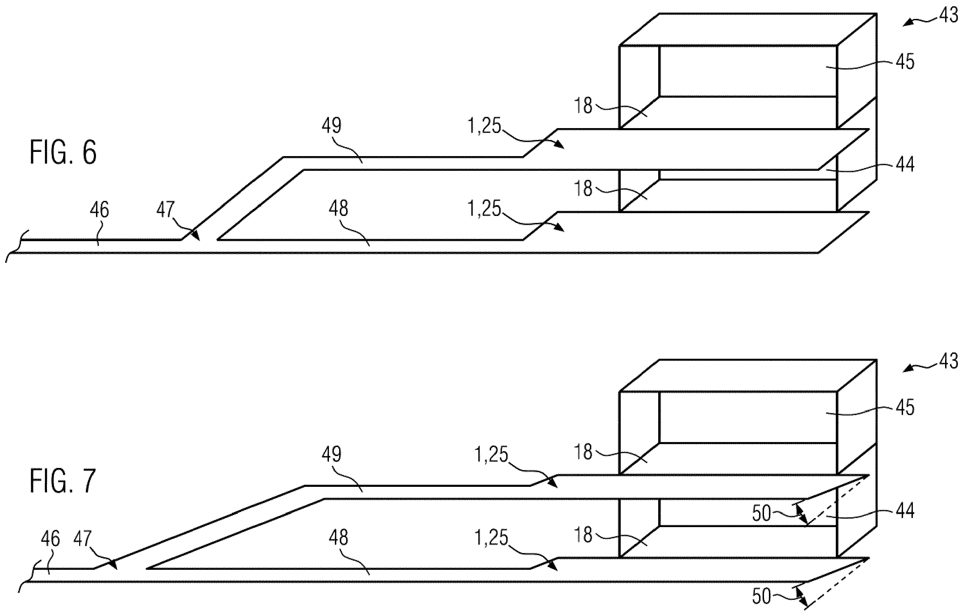

Die Figur 6 zeigt eine Schrägansicht einer thermischen Behandlungsvorrichtung 43 mit zwei Behandlungsdecks 44, 45 und zwei Behälterzuführvorrichtung 1, 25, die horizontal ausgerichtet sind. Die Behälterzuführvorrichtung 1, 25 können der ersten oder der zweiten Ausführungsform entsprechen. Die beiden Behandlungsdecks 44, 45 und die beiden Behälterzuführvorrichtung 1, 25 sind in der Wirkrichtung der Schwerkraft übereinander angeordnet.

Behälter, die in der thermischen Behandlungsvorrichtung 43 thermisch behandelt werden sollen, können mittels einer Transportvorrichtung 46 transportiert werden. Die Transportvorrichtung 46 ist beispielsweise einspurig ausgebildet. Um den beiden übereinander angeordneten Behälterzuführvorrichtungen 1, 25 jeweils Behälter zuführen zu können, ist eine Aufteilvorrichtung 47 vorgesehen, die den Behälterstrom in einen ersten und einen zweiten Anteil aufteilen kann. Mittels einer ersten Transportvorrichtung 48 können die Behälter der ersten Behandlungsvorrichtung 1, 25 (in der Figur 6 die untere Behandlungsvorrichtung) und mittels einer zweiten Transportvorrichtung 49 können die Behälter der zweiten Behandlungsvorrichtung 1, 25 (in der Figur 6 die obere Behandlungsvorrichtung) zugeführt werden.

Die Figur 7 zeigt eine Schrägansicht einer thermischen Behandlungsvorrichtung 43 mit zwei Behandlungsdecks 44, 45 und zwei Behälterzuführvorrichtung 1, 25, die geneigt ausgerichtet sind. Abgesehen von dem Winkel 50, der von einer Ebene, in der die Transportoberflächen der Behälterzuführvorrichtung koplanar angeordnet sind, und einer zur Wirkrichtung der Schwerkraft senkrechten Ebene eingeschlossen wird, entsprechen die in der Figur 7 gezeigten Elemente denen der Figur 6. Der Winkel 50 kann in einem Bereich von 0,5° bis 14° liegen.

## Patentansprüche

1. Thermische Behandlungsvorrichtung (43), wie Pasteur, Kühler oder Wärmer, mit mindestens einer Behälterzuführvorrichtung (1, 25) zum Zuführen von Behältern (40) zu je einem Massenstromförderer (18), der von der thermischen Behandlungsvorrichtung (43) umfasst ist,
wobei der Massenstromförderer (18) anschließend an die mindestens eine Behälterzuführvorrichtung (1, 25) angeordnet ist und
wobei die Behälterzuführvorrichtung (1) umfasst:
einen mindestens einspurigen Einlaufförderer (2), der in eine erste Richtung (16) antreibbar und ausgebildet ist, Behälter in die erste Richtung (16) zu fördern, **dadurch gekennzeichnet, dass** die Behälterzuführvorrichtung (1) umfasst:
parallel anschließend an den mindestens einspurigen Einlaufförderer (2) eine erste Gruppe (8) von mehreren parallel angeordneten ersten Förderern (3, 4, 5, 6, 7), die in die erste Richtung (16) antreibbar und ausgebildet sind, Behälter (40) in die erste Richtung (16) zu fördern,
parallel anschließend an die erste Gruppe (8) von mehreren parallel angeordneten ersten Förderern (3-7) eine zweite Gruppe (14) von mehreren parallel angeordneten zweiten Förderern (9, 10, 11, 12, 13), die in eine zweite Richtung (17) antreibbar und ausgebildet sind, Behälter (40) in die zweite Richtung (17) zu fördern, die entgegengesetzt zu der ersten Richtung (16) ist,
wobei die Behälter (40) von der zweiten Gruppe (14) von mehreren parallel angeordneten zweiten Förderern (9-13) quer zur zweiten Richtung (17) in Richtung (22) zu einem Massenstromförderer (18) abgebbar sind,
wobei oberhalb einer Transportoberfläche des mindestens einspurigen Einlaufförderers (2) und oberhalb zumindest einiger der Transportoberflächen der mehreren parallel angeordneten ersten Förderer (3-7) ein Geländer (26) mit Abweisern (27) vorgesehen ist,
wobei am Ende zumindest einiger der mehreren parallel angeordneten ersten Förderer (3-7) und am Anfang zumindest einiger der mehreren parallel angeordneten zweiten Förderer (9-13) oberhalb der Transportoberflächen ein konkav ausgebildetes Geländer (28) vorgesehen ist,
wobei das Geländer (26) mit den Abweisern (27) in das konkav ausgebildete Geländer (28) übergeht.

2. Die thermische Behandlungsvorrichtung (43) nach Anspruch 1, wobei ein Abgabebereich (19), in dem die Behälter von der zweiten Gruppe (14) von mehreren parallel angeordneten zweiten Förderern (9-13) quer zur zweiten Richtung (17) in die Richtung (22) zu einem Massenstromförderer (18) abgebbar sind, eine Länge (20) aufweist, die mindestens doppelt so groß ist wie eine Förderbreite (21) der Behälterzuführvorrichtung (1).

3. Die thermische Behandlungsvorrichtung (43) nach Anspruch 1 oder 2, wobei parallel anschließend an die zweite Gruppe (14) von mehreren parallel angeordneten zweiten Förderern (9-13) ein weiterer einspuriger Zulaufförderer (15) vorgesehen ist oder mehrere weitere einspurige Zulaufförderer vorgesehen sind, wobei der weitere einspurige Zulaufförderer (15) oder die mehreren weiteren einspurigen Zulaufförderer in die erste Richtung (16) antreibbar und ausgebildet ist/sind, Behälter (40) in die erste Richtung (16) zu fördern,
wobei beispielsweise der weitere einspurige Zulaufförderer (15) oder die mehreren weiteren einspurigen Zulaufförderer einen Zuführlängenbereich (23) umfasst/umfassen, entlang dem Behälter (40) von dem weiteren einspurigen Einlaufförderer (15) oder den mehreren weiteren einspurigen Zulaufförderer dem Massenstromförderer (18) zuführbar sind, wobei der Zuführlängenbereich (23) eine Länge (24) aufweist, die mindestens doppelt so groß ist wie eine Förderbreite (43) der Behälterzuführvorrichtung (25).

4. Die thermische Behandlungsvorrichtung (43) nach einem der Ansprüche 1 bis 3, wobei das konkav ausgebildete Geländer (28) eine Kurve umfasst, die einen Winkel beschreibt, der in einem Winkelbereich von 165° bis 195° liegt,
wobei beispielsweise oberhalb einer Transportoberfläche am Ende des weiteren einspurigen Zulaufförderers (15) ein weiteres konkaves Geländer (29) vorgesehen ist, wobei beispielsweise das weitere konkav ausgebildete Geländer (29) in das konkav ausgebildete Geländer (28) übergeht, wobei beispielsweise das weitere konkave Geländer (29) eine Kurve umfasst, die einen Winkel beschreibt, der in einem Winkelbereich von 75° bis 105° liegt.

5. Die thermische Behandlungsvorrichtung (43) nach einem der Ansprüche 1 bis 4, wobei oberhalb der Transportoberflächen zwischen der ersten Gruppe (8) und der zweiten Gruppe (14) ein gerades Geländer (30) vorgesehen ist, das derart ausgebildet ist, dass ein Übergangsbereich (31) für Behälter zwischen der ersten Gruppe (8) und der zweiten Gruppe (14) vorhanden ist.

6. Die thermische Behandlungsvorrichtung (43) nach einem der Ansprüche 1 bis 5, wobei oberhalb der Transportoberflächen der mehreren parallel angeordneten zweiten Förderer (9-13) ein Geländer (32) mit Stufen (33) vorgesehen ist, wobei beispielsweise das Geländer (32) mit den Stufen (33) den Übergangsbereich (31) für Behälter (40) frei lässt, wobei beispielsweise das gerade Geländer (30) in das Geländer (32) mit den Stufen (33) übergeht.

7. Die thermische Behandlungsvorrichtung (43) nach Anspruch 5 oder 6, wobei der Übergangsbereich (31), entlang der ersten Richtung (16) oder der zweiten Richtung (17) gesehen, eine Länge (34) aufweist, deren Wert um einen Faktor 1,8 bis 3 größer ist als ein Wert einer Förderbreite (35, 36) der ersten Gruppe (8) oder der zweiten Gruppe (14).

8. Die thermische Behandlungsvorrichtung (43) nach einem der Ansprüche 1 bis 7, wobei der mindestens einspurige Einlaufförderer (2) und/oder die mehreren parallel angeordneten ersten Förderer (3-7) und/oder die mehreren parallel angeordneten zweiten Förderer (9-13) und/oder der weitere einspurige Zulaufförderer (15) oder die mehreren weiteren einspurigen Zulaufförderer jeweils Transportoberflächen umfassen, die koplanar in einer Ebene (41) angeordnet sind, wobei die Ebene (41) mit einer zur Wirkrichtung (38) der Schwerkraft senkrechten Ebene (42) einen Winkel (37) von 0,5° bis 14° einschließt, oder beispielsweise einen Winkel von 0,5° bis 11°, oder beispielsweise einen Winkel von 0,5° bis 8°.

9. Die thermische Behandlungsvorrichtung (43) nach einem der Ansprüche 1 bis 8, wobei die Behälterzuführvorrichtung (1, 25) weiter eine Steuerungsvorrichtung zur Steuerung von Antriebsgeschwindigkeiten umfasst, wobei beispielsweise eine Steuerung vorgesehen ist, bei der der mathematische Betrag von Antriebsgeschwindigkeiten ausgehend von dem mindestens einspurigen Einlaufförderer (2) zu den mehreren parallel angeordneten ersten Förderern (3-7) in die erste Richtung (16) jeweils abnimmt, wobei der mathematische Betrag von Antriebsgeschwindigkeiten der mehreren parallel angeordneten zweiten Förderern (9-13) in die zweite Richtung (17) zunächst zunimmt und dann wieder abnimmt und/oder wobei der mathematische Betrag einer Antriebsgeschwindigkeit des weiteren einspurigen Zulaufförderers (15) in die erste Richtung (16) der kleinste der mathematischen Beträge ist oder wobei die mathematischen Beträge von Antriebsgeschwindigkeiten der mehreren weiteren einspurigen Zulaufförderer in die erste Richtung (16) jeweils kleiner sind als ein Betrag der Antriebsgeschwindigkeit des langsamsten der mehreren parallel angeordneten zweiten Förderern (9-13).

10. Die thermische Behandlungsvorrichtung (43) nach einem der Ansprüche 1 bis 9, wobei die thermische Behandlungsvorrichtung (43) ein Behandlungsdeck (44, 45) umfasst, oder wobei die thermische Behandlungsvorrichtung (43) zwei oder mehr Behandlungsdecks (44, 45) umfasst und entsprechend zwei oder mehr der Behälterzuführvorrichtung (1, 25).

11. Die thermische Behandlungsvorrichtung (43) nach einem der Ansprüche 1 bis 10, weiter umfassend eine weitere Steuerungsvorrichtung zur Steuerung einer Geschwindigkeit des Massenstromförderers (18).

12. Die thermische Behälterzuführvorrichtung nach einem der Ansprüche 1 bis 11, wobei genau ein einspuriger Einlaufförderer (2) vorgesehen ist, oder wobei zwei oder mehr einspurige Einlaufförderer (2) vorgesehen sind

13. Verfahren zum Betreiben der thermischen Behandlungsvorrichtung (43) nach einem der Ansprüche 1 bis 12.

14. Das Verfahren nach Anspruch 13, wobei eine Steuerung der Behälterzuführvorrichtung (1, 25) mittels der Steuervorrichtung erfolgt und/oder wobei eine Steuerung des Massenstromförderers (18) mittels der weiteren Steuerungsvorrichtung erfolgt, wobei beispielsweise eine Abstufung der verschiedenen Antriebsgeschwindigkeiten zueinander nicht-linear ist, wobei beispielsweise die Abstufungen zueinander jeweils prozentual sind oder jeweils einen Faktor betragen.

## Claims

1. Thermal treatment device (43), such as a pasteuriser, cooler or heater, having at least one container feed device (1, 25) for feeding containers (40) each to one mass flow conveyor (18) comprised by the thermal treatment device (43),
wherein the mass flow conveyor (18) adjoins the at least one container feed device (1, 25), and wherein the container feed device (1) comprises:
an at least one-track infeed conveyor (2) which is drivable in a first direction (16) and is designed to convey containers in the first direction (16),
**characterised in that** the container feed device (1) comprises:
a first group (8) of a plurality of parallel first conveyors (3, 4, 5, 6, 7) which are arranged so as to be parallel and adjoining the at least one-track infeed conveyor (2) and which are drivable in the first direction (16) and are designed to convey containers (40) in the first direction (16),
a second group (14) of a plurality of parallel second conveyors (9, 10, 11, 12, 13) which are arranged so as to be parallel and adjoining the first group (8) of a plurality of parallel first conveyors (3-7) and which are driveable in a second direction (17) and are designed to convey containers (40) in the second direction (17) which is counter to the first direction (16),
wherein the containers (40) are transferable transversely to the second direction (17) from the second group (14) of a plurality of parallel second conveyors (9-13) in direction (22) to a mass flow conveyor (18),
wherein above a transport surface of the at least one-track infeed conveyor (2) and above at least some of the transport surfaces of the plurality of parallel first conveyors (3-7), a rail (26) with deflectors (27) is provided,
wherein at the end of at least some of the plurality of parallel first conveyors (3-7) and at the beginning of at least some of the plurality of parallel second conveyors (9-13), above the transport surfaces, a concavely designed rail (28) is provided,
wherein the rail (26) with the deflectors (27) passes over into the concavely designed rail (28).

2. The Thermal treatment device (43) according to claim 1, wherein a transfer region (19), in which the containers of the second group (14) of a plurality of parallel second conveyors (9-13) are transferable transversely to the second direction (17) in the direction (22) to a mass flow conveyor (18), has a length (20) which is at least twice as large as a conveying width (21) of the container feed device (1).

3. The thermal treatment device (43) according to claim 1 or 2, wherein a further one-track inlet conveyor (15) is provided so as to be parallel and adjoining the second group (14) of a plurality of parallel second conveyors (9-13), or a plurality of further one-track inlet conveyors is provided, wherein the further one-track inlet conveyor (15) or the plurality of further one-track inlet conveyors are driveable in the first direction (16) and is/are designed to convey containers (40) in the first direction (16),
wherein, for example, the further one-track inlet conveyor (15) or the plurality of further one-track inlet conveyors comprise(s) a feed length region (23) along which containers (40) are supplyable from the further one-track inlet conveyor (15) or the plurality of further one-track inlet conveyors to the mass flow conveyor (18), wherein the feed length region (23) has a length (24) that is at least twice as large as a conveying width (43) of the container feed device (25).

4. The thermal treatment device (43) according to one of claims 1 to 3, wherein the concavely designed rail (28) comprises a curve that describes an angle lying within a range of angles of 165° to 195°,
wherein, for example, above a transport surface at the end of the further one-track inlet conveyor (15), a further concave rail (29) is provided, wherein, for example, the further concavely designed rail (29) passes over into the concavely designed rail (28), wherein, for example, the further concave rail (29) comprises a curve which describes an angle that is within a range of angles of 75° to 105°.

5. The thermal treatment device (43) according to one of claims 1 to 4, wherein above the transport surfaces between the first group (8) and the second group (14), a straight rail (30) is provided which is designed such that a transition region (31) for containers is provided between the first group (8) and the second group (14).

6. The thermal treatment device (43) according to one of claims 1 to 5, wherein above the transport surfaces of the plurality of parallel second conveyors (9-13), a rail (32) with steps (33) is provided, wherein, for example, the rail (32) with the steps (33) leaves the transition region (31) free for containers (40), wherein, for example, the straight rail (30) passes over into the rail (32) with the steps (33).

7. The thermal treatment device (43) according to claim 5 or 6, wherein the transition region (31), seen along the first direction (16) or the second direction (17), has a length (34) whose value is larger by a factor of 1.8 to 3 than a value of a conveying width (35, 36) of the first group (8) or the second group (14).

8. The thermal treatment device (43) according to one of claims 1 to 7, wherein the at least one-track infeed conveyor (2) and/or the plurality of parallel first conveyors (3-7), and/or the plurality of parallel second conveyors (9-13), and/or the further one-track inlet conveyor (15), or the plurality of further one-track inlet conveyors each comprise transport surfaces which are arranged in a coplanar manner in a plane (41), wherein the plane (41) includes an angle (37) of 0.5° to 14° with a plane (42) perpendicular to the direction of action (38) of the force of gravity, or, for example, an angle of 0.5° to 11°, or, for example, an angle of 0.5° to 8°.

9. The thermal treatment device (43) according to one of claims 1 to 8, wherein the container feed device (1, 25) furthermore comprises a control device for controlling drive speeds, wherein, for example, a control is provided wherein the mathematical amount of drive speeds each decreases, starting from the at least one-track infeed conveyor (2) to the plurality of parallel first conveyors (3-7) in the first direction (16), wherein the mathematical amount of drive speeds of the plurality of parallel second conveyors (9-13) initially increases in the second direction (17) and then decreases again, and/or wherein the mathematical amount of a drive speed of the further one-track inlet conveyor (15) in the first direction (16) is the smallest one of the mathematical amounts, or wherein the mathematical amounts of drive speeds of the plurality of further one-track inlet conveyors in the first direction (16) are each smaller than an amount of the drive speed of the slowest one of the plurality of parallel second conveyors (9-13).

10. The thermal treatment device (43) according to one of claims 1 to 9, wherein the thermal treatment device (43) comprises a treatment deck (44, 45), or wherein the thermal treatment device (43) comprises two or more treatment decks (44, 45) and correspondingly two or more of the container feed devices (1, 25).

11. The thermal treatment device (43) according to one of claims 1 to 10, further comprising a further control device for controlling a speed of the mass flow conveyor (18).

12. The thermal container feed device according to one of claims 1 to 11, wherein exactly one one-track infeed conveyor (2) is provided, or wherein two or more one-track infeed conveyors (2) are provided.

13. Method for operating the thermal treatment device (43) according to one of claims 1 to 12.

14. The method according to claim 13, wherein a control of the container feed device (1, 25) is accomplished by the control device, and/or wherein a control of the mass flow conveyor (18) is accomplished by the further control device, wherein, for example, a grading of the different drive speeds is non-linear with respect to each other, wherein, for example, the gradings are each percental with respect to each other or each amount to a factor.

## Revendications

1. Dispositif de traitement thermique (43), tel qu'un pasteurisateur, un refroidisseur ou un dispositif chauffant, avec au moins un dispositif d'acheminement de récipient (1, 25) pour alimenter des récipients (40) chacun vers un convoyeur à débit massique (18) qui est compris dans le dispositif de traitement thermique (43), dans lequel le convoyeur à débit massique (18) est agencé à la suite du au moins un dispositif d'acheminement de récipient (1, 25) et dans lequel le dispositif d'acheminement de récipient (1) comprend :
un convoyeur d'entrée à au moins une voie (2), qui peut être entraîné dans une première direction (16) et qui est conçu pour transporter des conteneurs dans la première direction (16), **caractérisé en ce que** le dispositif d'acheminement de récipient (1) comprend :
en parallèle après le convoyeur d'entrée à au moins une voie (2), un premier groupe (8) de plusieurs premiers convoyeurs agencés en parallèle (3, 4, 5, 6, 7), qui peuvent être entraînés dans la première direction (16) et sont conçus pour transporter des récipients (40) dans la première direction (16),
en parallèle après le premier groupe (8) de plusieurs premiers convoyeurs agencés en parallèle (3-7), un second groupe (14) de plusieurs seconds convoyeurs agencés en parallèle (9, 10, 11, 12, 13), qui peuvent être entraînés dans une seconde direction (17) et sont conçus pour transporter des récipients (40) dans la seconde direction (17) qui est opposée à la première direction (16),
dans lequel les récipients (40) peuvent être distribués du second groupe (14) de plusieurs seconds convoyeurs agencés en parallèle (9-13) transversalement à la seconde direction (17) dans la direction (22) vers un convoyeur à débit massique (18), dans lequel une rampe (26) avec des déflecteurs (27) est prévue au-dessus d'une surface de transport du convoyeur d'entrée à au moins une voie (2) et au-dessus d'au moins certaines des surfaces de transport de la pluralité de premiers convoyeurs agencés en parallèle (3-7),
dans lequel une rampe réalisée concave (28) est prévue à la fin d'au moins certains des plusieurs premiers convoyeurs agencés en parallèle (3-7) et au début d'au moins certains des plusieurs seconds convoyeurs agencés en parallèle (9-13) au-dessus des surfaces de transport,
dans lequel la rampe (26) avec les déflecteurs (27) se transforme en rampe réalisée concave (28).

2. Dispositif de traitement thermique (43) selon la revendication 1, dans lequel une zone de distribution (19), dans laquelle les récipients peuvent être distribués depuis le second groupe (14) à partir de plusieurs seconds convoyeurs agencés en parallèle (9-13), transversalement à la seconde direction (17) dans la direction (22) vers un convoyeur à débit massique (18), présente une longueur (20) qui est au moins deux fois plus grande qu'une largeur de transport (21) du dispositif d'acheminement de récipients (1).

3. Dispositif de traitement thermique (43) selon la revendication 1 ou 2, dans lequel un convoyeur d'entrée à voie unique supplémentaire (15) est prévu en parallèle après le second groupe (14) de plusieurs seconds convoyeurs agencés en parallèle (9-13) ou plusieurs convoyeurs d'entrée à voie unique supplémentaires sont prévus, dans lequel le convoyeur d'entrée à voie unique supplémentaires (15) ou les plusieurs convoyeurs d'entrée à voie unique supplémentaires peuvent être entraînés dans la première direction (16) et sont conçus pour transporter des récipients (40) dans la première direction (16),
dans lequel, par exemple, le convoyeur d'entrée à voie unique supplémentaire (15) ou les plusieurs convoyeurs d'alimentation à voie unique supplémentaires comprennent une plage de longueur d'acheminement (23), peuvent être acheminés le long du récipient (40) depuis le convoyeur d'entrée à voie unique supplémentaire (15) ou les plusieurs convoyeurs d'entrée à voie unique supplémentaires dans le convoyeur à débit massique (18), dans lequel la plage de longueur d'acheminement(23) présente une longueur (24) qui est au moins deux fois plus grande qu'une largeur de transport (43) du dispositif d'acheminement de récipient (25).

4. Dispositif de traitement thermique (43) selon l'une quelconque des revendications 1 à 3, dans lequel la rampe réalisée concave (28) comprend une courbe décrivant un angle qui se situe dans une plage angulaire de 165° à 195°,
dans lequel, par exemple, une rampe concave supplémentaire (29) est prévue au-dessus d'une surface de transport à la fin du convoyeur d'entrée à voie unique supplémentaire (15), dans lequel, par exemple, la rampe réalisée concave supplémentaire (29) se transforme en la rampe réalisée concave (28), dans lequel, par exemple, la rampe réalisée concave supplémentaire (29) comprend une courbe qui décrit un angle qui se situe dans une plage angulaire de 75° à 105°.

5. Dispositif de traitement thermique (43) selon l'une quelconque des revendications 1 à 4, dans lequel une rampe droite (30) est prévue au-dessus des surfaces de transport entre le premier groupe (8) et le second groupe (14), la rampe étant formée de telle sorte qu'il existe une zone de transition (31) pour les récipients entre le premier groupe (8) et le second groupe (14).

6. Dispositif de traitement thermique (43) selon l'une quelconque des revendications 1 à 5, dans lequel une rampe (32) avec des gradins (33) est prévue au-dessus des surfaces de transport des plusieurs seconds convoyeurs agencés en parallèle(9-13), dans lequel par exemple la rampe (32) avec les gradins (33) laisse libre la zone de transition (31) pour les récipients (40), dans lequel la rampe droite (30) se transforme par exemple en la rampe (32) avec les gradins (33).

7. Dispositif de traitement thermique (43) selon la revendication 5 ou 6, dans lequel la zone de transition (31), vue le long de la première direction (16) ou de la seconde direction (17), présente une longueur (34) dont la valeur est supérieure d'un facteur de 1,8 à 3 à une valeur d'une largeur de transport (35, 36) du premier groupe (8) ou du second groupe (14).

8. Dispositif de traitement thermique (43) selon l'une quelconque des revendications 1 à 7, dans lequel le au moins un convoyeur d'entrée à voie unique (2) et/ou les plusieurs premiers convoyeurs agencés en parallèle (3-7) et/ou les plusieurs seconds convoyeurs agencés en parallèle (9-13) et/ou le convoyeur d'entrée à voie unique supplémentaire (15) ou les plusieurs convoyeurs d'entrée à voie unique supplémentaires comprennent chacun des surfaces de transport qui sont agencées de manière coplanaire dans un plan (41), dans lequel le plan (41) comprend un angle (37) de 0,5° à 14° avec un plan (42) perpendiculaire à la direction d'action (38) de la gravité, ou par exemple un angle de 0,5° à 11°, ou par exemple un angle de 0,5° à 8°.

9. Dispositif de traitement thermique (43) selon l'une quelconque des revendications 1 à 8, dans lequel le dispositif d'acheminement de récipient (1, 25) comprend en outre un dispositif de commande pour commander des vitesses d'entraînement, dans lequel, par exemple, une commande est prévue, via laquelle la quantité mathématique de vitesses d'entraînement à partir du convoyeur d'entrée à au moins une voie (2) vers les plusieurs premiers convoyeurs agencés en parallèle (3-7) dans la première direction (16) diminue respectivement, dans lequel la quantité mathématique de vitesses d'entraînement des plusieurs seconds convoyeurs agencés en parallèle (9-13) dans la seconde direction (17) augmente d'abord puis diminue à nouveau et/ou dans lequel la quantité mathématique d'une vitesse d'entraînement du convoyeur d'entrée à une voie supplémentaire (15) dans la première direction (16) est la plus petite des quantités mathématiques ou dans lequel les quantités mathématiques de vitesses d'entraînement des plusieurs convoyeurs d'entrée à une voie supplémentaires dans la première direction (16) sont respectivement inférieures à une quantité de la vitesse d'entraînement du plus lent des plusieurs seconds convoyeurs agencés en parallèle (9-13).

10. Dispositif de traitement thermique (43) selon l'une quelconque des revendications 1 à 9, dans lequel le dispositif de traitement thermique (43) comprend un plateau de traitement (44, 45), ou dans lequel le dispositif de traitement thermique (43) comprend deux plateaux de traitement (44, 45) ou plus et correspond à deux ou plus du dispositif d'acheminement de récipient (1, 25).

11. Dispositif de traitement thermique (43) selon l'une quelconque des revendications 1 à 10, comprenant en outre un dispositif de commande supplémentaire pour commander une vitesse du convoyeur à débit massique (18).

12. Dispositif d'acheminement de récipient thermique selon l'une des revendications 1 à 11, dans lequel exactement un convoyeur d'entrée à voie unique (2) est prévu, ou dans lequel deux convoyeurs d'entrée à voie unique (2) ou plus sont prévus.

13. Procédé de fonctionnement du dispositif de traitement thermique (43) selon l'une quelconque des revendications 1 à 12.

14. Procédé selon la revendication 13, dans lequel une commande du dispositif d'acheminement de récipient (1, 25) est effectuée au moyen du dispositif de commande et/ou dans lequel une commande du convoyeur à débit massique (18) est effectuée au moyen du dispositif de commande supplémentaire, dans lequel par exemple une gradation des différentes vitesses d'entraînement les unes par rapport aux autres est non linéaire, dans lequel par exemple les gradations les unes par rapport aux autres sont respectivement en pourcentage ou sont respectivement un facteur.
